(19) Europäisches Patentamt
European Patent Office
Office européen des brevets

(11) **EP 3 953 099 B1**

(12) **EUROPÄISCHE PATENTSCHRIFT**

(45) Veröffentlichungstag und Bekanntmachung des Hinweises auf die Patenterteilung:
**15.11.2023   Patentblatt 2023/46**

(51) Internationale Patentklassifikation (IPC):
**B23K 26/70** (2014.01)      **G02B 1/02** (2006.01)
**G02B 5/00** (2006.01)

(21) Anmeldenummer: **20720748.1**

(22) Anmeldetag: **07.04.2020**

(52) Gemeinsame Patentklassifikation (CPC):
**G02B 5/003; G02B 1/02**

(86) Internationale Anmeldenummer:
**PCT/EP2020/059856**

(87) Internationale Veröffentlichungsnummer:
**WO 2020/208003 (15.10.2020 Gazette 2020/42)**

(54) **VERFAHREN ZUR TERMINIERUNG OPTISCHER STRAHLUNG SOWIE DAFÜR AUSGEBILDETE OPTISCHE STRAHLFALLE**

METHOD FOR TERMINATING OPTICAL RADIATION AND OPTICAL BEAM TRAP EMBODIED THEREFOR

PROCÉDÉ SERVANT À METTRE FIN À UN RAYONNEMENT OPTIQUE, AINSI QUE PIÈGE À FAISCEAU OPTIQUE RÉALISÉ À CET EFFET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2019   DE 102019205222**

(43) Veröffentlichungstag der Anmeldung:
**16.02.2022   Patentblatt 2022/07**

(73) Patentinhaber: **Fraunhofer-Gesellschaft zur Förderung der angewandten Forschung e.V.**
**80686 München (DE)**

(72) Erfinder:
• **LUTTMANN, Jörg**
  **52074 Aachen (DE)**
• **ESSER, Dominik**
  **52074 Aachen (DE)**

(56) Entgegenhaltungen:
**US-A1- 2018 191 129**

• **Anonymous: "CVD ZINC SELENIDE(TM)", , 1. Januar 2008 (2008-01-01), XP055701662, Gefunden im Internet: URL:https://nshosting.dow.com/doc-archive/ business/gt/infrared_materials/cvd_zinc_se lenide/tds/cvd_zinc_selenide.pdf [gefunden am 2020-06-05]**
• **KAIJIE NING ET AL: "Growth and characterization of large-scale Ti:sapphire crystal using heat exchange method for ultra-fast ultra-high-power lasers", CRYSTENGCOMM, Bd. 17, Nr. 14, 1. Januar 2015 (2015-01-01), Seiten 2801-2805, XP055701788, DOI: 10.1039/C5CE00014A**
• **Anonymous: "Diamond Optical Vacuum Windows", , 26. Juni 2016 (2016-06-26), XP055701659, Gefunden im Internet: URL:https://web.archive.org/web/2016062619 1017if_/http://www.diamond-materials.com:8 0/downloads/diamond_optical_windows.pdf [gefunden am 2020-06-05]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 953 099 B1

**Beschreibung**

**Technisches Anwendungsgebiet**

Die vorliegende Erfindung betrifft ein Verfahren zur Terminierung optischer Strahlung, insbesondere Laserstrahlung, bei dem die optische Strahlung auf einen Absorptionskörper gerichtet wird, der die optische Strahlung absorbiert, sowie eine zur Durchführung des Verfahrens ausgebildete optische Strahlfalle.

In Lasersystemen ist es häufig erforderlich, Laserstrahlung zu terminieren, also an einer weiteren Propagation zu hindern. So muss beispielsweise in Lasersystemen, die in der industriellen Produktion eingesetzt werden, der Laserstrahl bei einem Werkstückwechsel von der Bearbeitungsebene weggeschaltet werden. Dies kann über einen Spiegel erfolgen, der in den Strahlengang zur Bearbeitungsebene eingeführt wird, um die Strahlung in eine andere Richtung zu lenken. Der abgelenkte Laserstrahl muss dabei aus Sicherheitsgründen in einer Strahlfalle terminiert werden, in der die Strahlungsenergie möglichst vollständig in Wärmeenergie umgewandelt wird. Ein weiteres Beispiel betrifft nichtlineare Prozesse zur Frequenzkonversion von Laserstrahlung, bei denen die Konversionseffizienz im Allgemeinen kleiner als 1 ist. Die ursprüngliche Laserstrahlung wird also nicht vollständig in die Strahlung mit der gewünschten Frequenz konvertiert. Bei parametrischen Prozessen entsteht zusätzlich Strahlung mit einer dritten Frequenz, die häufig ebenfalls unerwünscht ist. Die unerwünschten Frequenzanteile müssen in beiden Fällen in einer Strahlfalle terminiert werden.

Die Blockierung bzw. Terminierung der Laserstrahlung muss so erfolgen, dass die nicht gewünschte Strahlung oder der Umwandlungsprozess keinen unmittelbaren oder durch Sekundäreffekte verursachten Schaden an der Umgebung oder am Lasersystem anrichtet. Insbesondere muss vermieden werden, dass es bei zu hoher Laserintensität in oder an der Strahlfalle zu unerwünschtem Materialabtrag kommt.

**Stand der Technik**

Viele bekannte Strahlfallen nutzen Körper aus für die Laserstrahlung intransparenten Materialien, die eine sehr geringe Eindringtiefe im Sub-Mikrometer-Bereich für die Laserstrahlung aufweisen. Die Laserstrahlung wird also bereits an der Oberfläche vollständig oder - bei reflektierenden oder streuenden Oberflächen - teilweise absorbiert. Die restliche Strahlung wird an der Oberfläche reflektiert oder gestreut. Bei häufig eingesetzten metallischen Körpern beträgt die Eindringtiefe typischerweise je nach Wellenlänge 0,5 nm bis 10 nm. Die Reflektion liegt im Bereich zwischen 50% und 99%.

Weiterhin ist die Nutzung von Keramiken als Absorptionskörper in Strahlfallen bekannt. Keramiken sind dielektrische, gesinterte Werkstoffe mit einer Körnung. Die auftreffende Laserstrahlung dringt in die Keramik ein und erfährt teilweise Absorption und teilweise Streuung durch Reflexion an den einzelnen Körnern. Die Eindringtiefe, in der das mehrfache Absorbieren und Streuen der Laserstrahlung stattfindet, hängt von der Art und der Struktur der Keramik ab und kann bis zur Größenordnung 1 mm betragen.

Durch eine geschickte geometrische Anordnung von makroskopischen Körpern und Oberflächen aus für die Laserstrahlung intransparenten Materialien kann die reflektierte und gestreute Strahlung in mehrfachen Schritten aus Absorption und Reflexion oder Streuung vollständig vom Körpermaterial aufgenommen werden, wie dies beispielsweise in der DE 102012219635 A1 beschrieben ist. Der Körper wird dabei aus einem sehr gut wärmeleitenden Material gewählt oder aktiv gekühlt. Um die Laserintensität beim Auftreffen auf die Strahlfalle zu minimieren, wird auf eine Maximierung der Fläche geachtet, mit der der Laserstrahl auf den Körper bzw. die Strahlfalle trifft. Zur Erhöhung der Absorption der Oberfläche werden häufig zusätzlich Beschichtungen aufgebracht oder dünne Schichten eines sehr gut absorbierenden Materials direkt mit der Oberfläche kontaktiert. Diese sind dünn ausgeführt, da gut absorbierende Materialien häufig schlecht wärmeleitend sind.

Die US 6792017 B2 beschreibt eine Strahlfalle für Laserstrahlung aus einer oder mehreren die Strahlung absorbierenden Glasplatten, die in Kontakt mit einem vorzugsweise flüssigen Kühlmedium stehen.

Allerdings besteht bei vielen bekannten Strahlfallen das Problem, dass auch bei vergleichsweise geringen Laserintensitäten die lokale Wirkung durch die kurzen Absorptionslängen und bei Keramiken durch die Materialeigenschaften und lokalen Intensitäts-überhöhungen aufgrund der Körnung dazu führt, dass größere Partikelmengen vom Material des Absorptionskörpers gelöst werden. So haben Messungen ergeben, dass beispielsweise beim Beschuss von Edelstahl mit Laserpulsen einer Pulsdauer von 20 ns selbst bei Fluenzen unterhalb 0,5 J/cm$^2$ eine signifikante Anzahl von Partikeln von der Oberfläche abgetragen wird. Dieser Materialabtrag ist unerwünscht, da die Partikel die Umgebung und Komponenten des Lasersystems kontaminieren.

US2018191129 A1 offenbart eine Strahlfalle mit einem dotierten monokristallinen Saphir.

Die Aufgabe der vorliegenden Erfindung besteht darin, ein Verfahren zur Terminierung optischer Strahlung sowie eine dafür ausgebildete Strahlfalle anzugeben, mit denen ein unerwünschter Partikelabtrag verringert oder vollständig unterbunden wird und die eine gute Wärmeabführung ermöglichen.

**Darstellung der Erfindung**

Die Aufgabe wird mit dem Verfahren und der Strahlfalle gemäß den Patentansprüchen 1 und 11 gelöst. Vorteilhafte Ausgestaltungen des Verfahrens sowie der Strahlfalle sind Gegenstand der abhängigen Patentansprüche oder lassen sich der nachfolgenden Beschreibung sowie den Ausführungsbeispielen entnehmen.

Bei dem vorgeschlagenen Verfahren zur Terminierung optischer Strahlung, insbesondere von Laserstrahlung, wird die optische Strahlung in bekannter Weise auf einen Absorptionskörper gerichtet, der die optische Strahlung absorbiert. Das Verfahren zeichnet sich dadurch aus, dass der Absorptionskörper aus einem kristallinen, vorzugsweise monokristallinen, Material mit einem ausreichend kleinen imaginären Brechungsindex für die zu absorbierende optische Strahlung gewählt wird, der zu einer Absorptionslänge der optischen Strahlung von > 1 mm in dem Absorptionskörper führt. Bei dem kristallinen Material handelt es sich vorzugsweise um ein ungesintertes Material. Der Absorptionskörper wird dann so dimensioniert, dass die optische Strahlung im Absorptionskörper vollständig oder zumindest zu einem für die Anwendung erforderlichen hohen Anteil absorbiert wird. Unter optischer Strahlung ist dabei elektromagnetische Strahlung im UV-, VIS- und IR-Wellenlängenbereich zu verstehen.

Durch die Wahl eines geeignet kleinen imaginären Brechungsindex ist die Absorption der optischen Strahlung nicht auf die Oberfläche des Absorptionskörpers beschränkt, sondern verteilt sich über eine größere Absorptionslänge. Die Eindringtiefe bzw. Absorptionslänge der optischen Strahlung liegt daher je nach Wahl des imaginären Brechungsindex und zu absorbierender Wellenlängen im mm- bis cm-Bereich. Im Wellenlängenbereich der optischen Strahlung um 1 $\mu$m muss der imaginäre Brechungsindex $n_i$ beispielsweise $\leq 10^{-4}$ betragen, um die gewünschte Absorptionslänge zu erreichen.

Die Wahl des Materials und damit auch des imaginären Brechungsindex wird vorzugsweise auf die zu terminierende Laserleistung abgestimmt. Um eine Ablösung von Partikeln beim Eindringen in den Absorptionskörper zu verhindern, wird also bei höherer Laserleistung ein kleinerer imaginärer Brechungsindex als bei geringerer Laserleistung gewählt. Kristalle haben im Allgemeinen eine höhere Zerstörschwelle, so dass dadurch die Gefahr eines Partikelabtrags nochmals verringert wird. Die Wahl des Absorptionskörpers aus einem kristallinen Material bedeutet auch eine sehr gute Wärmeleitfähigkeit des Absorptionskörpers im Vergleich zu Gläsern, was eine gute Wärmeabführung gewährleistet. Durch die größeren Absorptionslängen weist der Absorptionskörper auch entsprechend große Seitenflächen auf, die für die Wärmeabführung genutzt werden können. Weiterhin lassen sich auf Kristalle dielektrische Beschichtungen aufbringen, bspw. eine Antireflexbeschichtung, um eine Reflexion der auftreffenden optischen Strahlung auf ein Minimum zu reduzieren. Vorzugsweise wird daher die Eintrittsfläche des Absorptionskörpers für die optische Strahlung mit einer Antireflexbeschichtung für die optische Strahlung versehen. Alternativ kann die Eintrittsfläche - insbesondere bei linear polarisierter optischer Strahlung - auch unter dem Brewsterwinkel zur einfallenden Strahlung angeordnet werden, um Reflexionen zu reduzieren oder zu vermeiden.

Der Absorptionsweg für die Laserleistung wird bei dem vorgeschlagenen Verfahren hinreichend lang gewählt, so dass die absorbierte Leistung das absorbierende Medium nicht lokal beschädigt und keine Partikel abgetragen werden. Die lineare Absorption in einem Medium kann durch den komplexen Brechungsindex $n_c$ beschrieben werden. Dabei ist

$$n_c = n_r + i n_i,$$

wobei $n_r$ dem reellen Brechungsindex und $n_i$ dem imaginären Brechungsindex entspricht. Die Intensität der Laserstrahlung I wird in einem absorbierenden Medium exponentiell gedämpft:

$$I(y) = I_0 \cdot e^{-\alpha y},$$

wobei $I_0$ der Ausgangsintensität und $\alpha$ dem Dämpfungskoeffizienten

$$\alpha = 2\omega n_i/c$$

mit der Lichtgeschwindigkeit c und der Kreisfrequenz $\omega$ der optischen Strahlung entsprechen. Die Absorptionslänge ist dann definiert als $1/\alpha$.

Bei Metallen liegen $n_i$ in der Größenordnung 1 und $n_r$ in der Größenordnung 0,1, was zu Reflektivitäten im Bereich von 0,5 bis nahezu 1 und den genannten Eindringtiefen im nm-Bereich (Oberflächenabsorption) führt. Bei vollständig transparenten Medien verschwindet der Imaginärteil des Brechungsindex.

In einer bevorzugten Ausgestaltung des vorgeschlagenen Verfahrens sowie der zugehörigen Strahlfalle wird in dem Absorptionskörper entstehende Wärme über ein Kühlmedium abgeführt, das mit den Seitenflächen des Absorptionskörpers in Kontakt steht. Als Kühlmedium kann hierbei eine Kühlflüssigkeit wie beispielsweise Wasser eingesetzt werden. Der Absorptionskörper befindet sich dabei mit den Seitenflächen in einer geeigneten Umhüllung, die von dem Kühlmedium durchströmt wird. In einer weiteren vorteilhaften Ausgestaltung wird als Kühlmedium ein Kühlkörper, vorzugsweise ein metallischer Kühlkörper eingesetzt. Dieser kann als passives Kühlmedium wirken oder auch zusätzlich mit Kühlkanälen durchsetzt sein, durch die ein geeignetes Kühlmedium strömt.

Die zur Durchführung des Verfahrens ausgebildete Strahlfalle weist entsprechend einen Absorptionskörper mit einer Eintrittsfläche für die optische Strahlung auf, der aus einem kristallinen Material mit einem imaginären Brechungsindex $n_i$ für die zu absorbierende optische Strahlung besteht, der zu einer Absorptionslänge der optischen Strahlung von > 1 mm im Absorptionskörper führt. Der Absorptionskörper steht dabei vorzugsweise mit einem Kühlmedium, insbesondere einem Kühlkörper, an den Seitenflächen in Kontakt.

Das vorzugsweise monokristalline Material für den Absorptionskörper wird so gewählt, dass es für die zu absorbierende Strahlung einen entsprechend geringen imaginären Brechungsindex aufweist. Für eine Wellenlänge der Laserstrahlung von 1064 nm kann hierzu beispielsweise ein Cr:YAG-Kristall eingesetzt werden. Für eine Wellenlänge von 10,6 $\mu$m entsprechend $CO_2$-Laserstrahlung ist beispielsweise Zinkselenid geeignet. Für eine Wellenlänge im VIS-Bereich, insbesondere von 532 nm entsprechend frequenzverdoppelter Laserstrahlung von 1064 nm sind beispielsweise Titan:Saphir-Kristalle geeignet. Ein weiteres kristallines Material für den Absorptionskörper ist dotierter Diamant. Über die Dotierung (Dotierungsmaterial und Dotierungskonzentration) kann die Absorption an die Wellenlänge der zu terminierenden optischen Strahlung angepasst werden. Außerdem hat Diamant eine extrem gute Wärmeleitfähigkeit und lässt sich einfach in eine Wärmesenke einlöten.

Das vorgeschlagene Verfahren sowie die zugehörige Strahlfalle lassen sich für alle Anwendungen einsetzen, in denen eine Terminierung eines optischen Strahls erforderlich ist. Dies betrifft insbesondere Anwendungen mit gepulsten Lasersystemen und Hochleistungslasersystemen.

## Kurze Beschreibung der Zeichnungen

Das vorgeschlagene Verfahren sowie die zugehörige Strahlfalle werden nachfolgend anhand von Ausführungsbeispielen in Verbindung mit den Zeichnungen nochmals näher erläutert. Hierbei zeigen:

Fig. 1　　ein erstes Beispiel für eine bei dem Verfahren einsetzbare Strahlfalle; und

Fig. 2　　ein zweites Beispiel für eine bei dem Verfahren einsetzbare Strahlfalle.

## Wege zur Ausführung der Erfindung

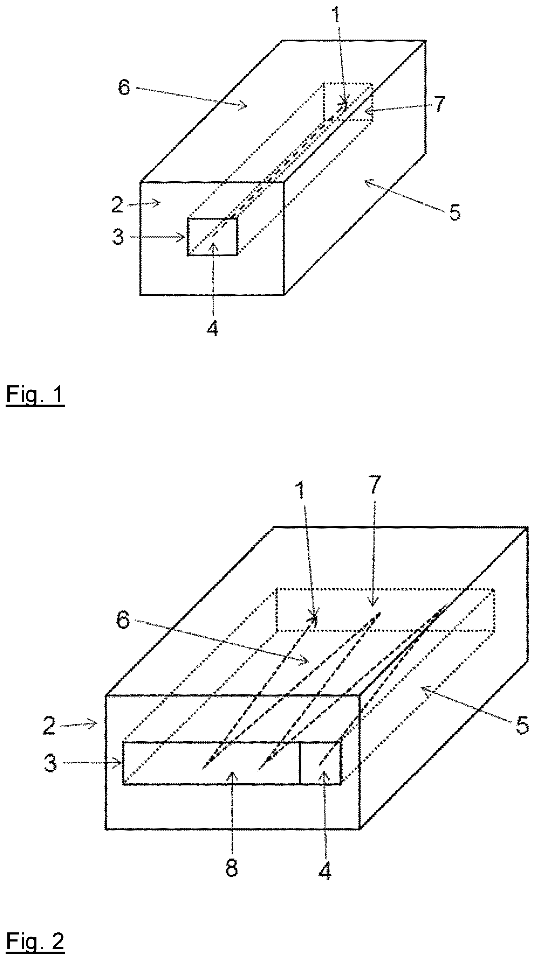

Bei dem vorgeschlagenen Verfahren wird der optische Strahl in einem Absorptionskörper mit speziellen Eigenschaften absorbiert. Fig. 1 zeigt hierzu ein erstes Beispiel für eine entsprechend ausgebildete Strahlfalle, mit der ein Laserstrahl 1 terminiert werden kann. Die Strahlfalle besteht in diesem Beispiel aus einem quaderförmigen Absorptionskörper 3 aus einem Kristallmaterial, in das der Laserstrahl über eine Eintrittsfläche 4 eintritt. Der Laserstrahl 1 ist hierbei im Absorptionskörper gestrichelt angedeutet. Eine vorzugsweise an der Eintrittsfläche 4 aufgebrachte optische Beschichtung sorgt dafür, dass der Laserstrahl 1 nicht an der Oberfläche reflektiert wird, sondern vollständig in das Kristallvolumen transmittiert wird. Für den Kristall bzw. Absorptionskörper 3 und dessen Beschichtung können beispielsweise Kristalle und Beschichtungen benutzt werden, die auch bei der Erzeugung von Laserstrahlung eingesetzt werden und daher der hohen Laserintensität problemlos standhalten.

Als Alternative zu einer optischen AntireflexBeschichtung kann bei bekannter Polarisation der zu terminierenden Laserstrahlung die Strahleintrittsfläche 4 auch im Brewster-Winkel zum Laserstrahl angeordnet werden. In einer derartigen Ausgestaltung kann dann auf eine Beschichtung verzichtet werden, was im Allgemeinen die Zerstörschwelle heraufsetzt.

Die Absorptionslänge des Laserstrahls 1 im Kristallvolumen wird über die Auswahl des Kristallmaterials so gewählt, dass genügend große Kristallseitenflächen 5, 6 (sowie jeweils gegenüber liegende Flächen) vorhanden sind, um die aufgrund der Absorption entstehende Wärme abzuleiten. Dafür werden die Seitenflächen des Kristalls im vorliegenden Beispiel mit einer Wärmesenke 2 in Form eines sehr gut wärmeleitenden oder auch aktiv gekühlten Körpers kontaktiert. Diese Wärmesenke 2 kann auch aus mehreren Teilen zusammengesetzt sein.

Bei der Umwandlung der Laserstrahlung im Kristall sind zwei Typen zu unterscheiden. Beim ersten Typ, der nicht unter den Gegenstand der Ansprüche fällt, wird die absorbierte Laserenergie durch nicht-strahlende Relaxationsprozesse im Kristall direkt und vollständig in Wärme umgewandelt. Beim zweiten Typ wird durch einen Energie-Relaxationsprozess im Kristall Fluoreszenz-strahlung erzeugt. Das Kristallmaterial ist dabei so gewählt, dass diese Strahlung eine andere Wellenlänge als die absorbierte Laserstrahlung aufweist. In dem letztgenannten Fall sind dann alle freien Kristalloberflächen, so ausgeführt, dass möglichst keine Fluoreszenz-Strahlung das Kristallvolumen verlässt. An den Flächen mit Kontakt zur Wärmesenke (Seitenflächen 5, 6 sowie jeweils gegenüber liegende Flächen) wird die Fluoreszenzstrahlung durch die Wärmesenke absorbiert. Alle anderen Flächen sind so optisch beschichtet, dass die Fluoreszenz-Strahlung jeweils in das Kristallvolumen rückreflektiert wird. Insbesondere wird die Strahleintrittsfläche 4, durch die die Laserstrahlung 1 in das Kristallvolumen eintritt, für Strahlung mit der Laser-Wellenlänge transmittierend und für Strahlung mit der FluoreszenzWellenlänge reflektierend ausgebildet. Im Gegensatz zur Laserstrahlung hat die Fluoreszenz-Strahlung eine deutlich kleinere Intensität. Sie wird am Ort der Laserstrahlabsorption nicht in den kleinen Raumwinkel des Laserstrahls emittiert, sondern gleichverteilt in den kompletten Raum. Falls es sich um gepulste Laserstrahlung handelt, wird die Intensität der Fluoreszenzstrahlung zusätzlich um das Verhältnis von Laserpulsdauer (typisch ps bis ns) und der Dauer der Erzeugung der Fluoreszenzstrahlung (typisch $\mu$s bis wenige ms) verringert. Durch diese Effekte sind auch Reste von Fluoreszenzstrahlung, die den Kristall bzw. Absorptionskörper 3 verlassen, von ausreichend geringer Intensität, um keine Schädigung von in der Umgebung befindlichen Komponenten hervorzurufen.

Die Anbindung des Absorptionskörpers an die Wärmesenke 2 kann in unterschiedlicher Weise erfolgen, insbesondere durch eine Lötverbindung, aber bspw. auch durch reinen Kontakt oder durch eine Klebeverbindung. Die Wärmesenke kann hierbei an allen Seiten des Absorptionskörpers - mit Ausnahme der Eintrittsfläche - an den Absorptionskörper angebunden sein oder auch nur an einigen dieser Seiten. In dem letztgenannten Fall kann zusätzlich eine Abschirmung ohne direkte Anbindung an den Absorptionskörper, aber dicht an den freien Seiten positioniert sein, um den Absorptionskörper verlassendes Fluoreszenzlicht zu absorbieren. Diese Abschirmung kann auch direkt mit der Wärmesenke verbunden sein.

Um mit möglichst kompakten Abmessungen des Absorptionskörpers 3 für den Laserstrahl 1 einen möglichst langen Absorptionsweg im Kristall zu erreichen, kann optional die der Strahleintrittsfläche 4 gegenüberliegende Kristalloberfläche 7 so optisch beschichtet werden, dass sie den Laserstrahl 1 in den Absorptionskörper zurückreflektiert.

In einer weiteren Ausgestaltung, wie sie in Fig. 2 beispielhaft dargestellt ist, kann der Absorptionskörper 3 auch so ausgebildet bzw. optisch beschichtet werden, dass eine Mehrfachreflexion des in den Absorptionskörper 3 eingetretenen Laserstrahls auftritt. Im Beispiel der Fig. 2 ist hierbei zusätzlich zu der Kristalloberfläche 7, die der Strahleintrittsfläche 4 gegenüber liegt, auch die in Fig. 2 dargestellte Teilfläche 8, die sich seitlich an die Strahleintrittsfläche 4 anschließt, beschichtet. Durch schräge Einkopplung des Laserstrahls über die Strahleintrittsfläche 4 wird der Laserstrahl dann zwischen den beiden sich gegenüberliegenden Flächen 7 und 8 mehrfach hin- und her reflektiert und auf diesem Weg vollständig absorbiert. Auf diese Weise wird eine insgesamt kompaktere Anordnung im Vergleich zur Ausgestaltung der Fig. 1 erreicht.

Die in den beiden Ausführungsbeispielen dargestellten Absorptionskörper weisen eine quaderförmige Geometrie auf. Die Absorptionskörper können selbstverständlich auch andere Geometrien, beispielsweise eine zylinderförmige Geometrie oder auch eine Geometrie mit nicht parallel zueinander verlaufenden Oberflächen aufweisen.

Bezugszeichenliste

1     Laserstrahl
2     Wärmesenke
3     Absorptionskörper/Kristall
4     Strahleintrittsfläche
5     Seitenfläche
6     Seitenfläche
7     gegenüber liegende Oberfläche
8     Teilfläche

**Patentansprüche**

1. Verfahren zur Terminierung optischer Strahlung, insbesondere Laserstrahlung, bei dem die optische Strahlung (1) auf einen Absorptionskörper (3) gerichtet wird, der eine Eintrittsfläche (4) für die optische Strahlung (1) aufweist und die optische Strahlung (1) absorbiert,

   wobei der Absorptionskörper (3) aus einem kristallinen Material mit einem imaginären Brechungsindex für die zu absorbierende optische Strahlung (1) gewählt wird,
   **dadurch gekennzeichnet,**
   **dass** der imaginäre Brechungsindex zu einer Absorptionslänge der optischen Strahlung (1) von > 1 mm in dem Absorptionskörper (3) führt, wobei der Absorptionskörper (3) aus einem kristallinen Material gewählt wird, das bei Absorption der optischen Strahlung (1) Fluoreszenzstrahlung emittiert, und wobei eine oder mehrere Oberflächen des Absorptionskörpers (3) mit einer die Fluoreszenzstrahlung reflektierenden oder absorbierenden Beschichtung versehen sind, um ein Austreten der Fluoreszenzstrahlung aus dem Absorptionskörper (3) zu verhindern oder zumindest zu reduzieren.

2. Verfahren nach Anspruch 1,
   **dadurch gekennzeichnet,**
   **dass** die Eintrittsfläche (4) des Absorptionskörpers (3) für die optische Strahlung (1) eine Antireflexbeschichtung für die optische Strahlung (1) aufweist.

3. Verfahren nach Anspruch 1,
   **dadurch gekennzeichnet,**
   **dass** die Eintrittsfläche (4) des Absorptionskörpers (3) für die optische Strahlung (1) bei linear polarisierter optischer Strahlung (1) so angeordnet wird, dass die optische Strahlung (1) unter dem Brewster-Winkel auf die Eintrittsfläche (4) trifft.

4. Verfahren nach einem der Ansprüche 1 bis 3,
   **dadurch gekennzeichnet,**
   **dass** durch Absorption der optischen Strahlung (1) entstehende Wärme über ein Kühlmedium (2) abgeführt wird, das mit Seitenflächen (5, 6) des Absorptionskörpers (3) in Kontakt steht.

5. Verfahren nach Anspruch 4,
   **dadurch gekennzeichnet,**
   **dass** als Kühlmedium (2) ein Kühlkörper oder eine Kühlflüssigkeit eingesetzt wird.

6. Verfahren nach einem der Ansprüche 1 bis 5,
   **dadurch gekennzeichnet,**
   **dass** das kristalline Material so gewählt wird, dass die Absorptionslänge der optischen Strahlung (1) im Absorptionskörper (3) Abmessungen des Absorptionskörpers (3) erfordert, die eine ausreichende Abführung von durch Absorption der optischen Strahlung (1) entstehender Wärme über Seitenflächen (5, 6) des Absorptionskörpers (3) ermöglichen.

7. Verfahren nach einem der Ansprüche 1 bis 6,
   **dadurch gekennzeichnet,**
   **dass** der Absorptionskörper (3) an einer Oberfläche (7), die der Eintrittsfläche (4) für die optische Strahlung (1) gegenüber liegt, eine optische Beschichtung trägt, an der in den Absorptionskörper (3) eingetretene optische Strahlung (1) reflektiert wird.

8. Verfahren nach Anspruch 7,
   **dadurch gekennzeichnet,**
   **dass** der Absorptionskörper (3) auch an einer oder mehreren anderen Oberflächen die optische Beschichtung trägt, um durch Mehrfachreflexion den Strahlweg der optischen Strahlung (1) im Absorptionskörper (3) zu verlängern.

9. Verfahren nach einem der Ansprüche 1 bis 8,
   **dadurch gekennzeichnet,**
   **dass** als kristallines Material ein dotiertes Diamantmaterial gewählt wird.

10. Strahlfalle für optische Strahlung, insbesondere zur Durchführung des Verfahrens nach einem oder mehreren der vorangehenden Patentansprüche,

    die einen Absorptionskörper (3) mit einer Eintrittsfläche (4) für die optische Strahlung (1) aufweist,
    wobei der Absorptionskörper (3) aus einem kristallinen Material mit einem imaginären Brechungsindex für die zu absorbierende optische Strahlung (1) besteht,
    **dadurch gekennzeichnet,**
    **dass** der imaginäre Brechungsindex zu einer Absorptionslänge der optischen Strahlung (1) von > 1 mm in dem Absorptionskörper (3) führt, wobei das kristalline Material bei Absorption der optischen Strahlung (1) Fluoreszenzstrahlung emittiert und eine oder mehrere Oberflächen des Absorptionskörpers (3) mit einer die Fluoreszenz-strahlung reflektierenden oder absorbierenden Beschichtung versehen sind, um ein Austreten der Fluoreszenzstrahlung aus dem Absorptionskörper (3) zu verhindern oder zumindest zu reduzieren.

11. Strahlfalle nach Anspruch 10,
    **dadurch gekennzeichnet,**
    **dass** die Eintrittsfläche (4) des Absorptionskörpers (3) eine Antireflexbeschichtung für die optische Strahlung (1) aufweist.

12. Strahlfalle nach Anspruch 10 oder 11,
    **dadurch gekennzeichnet,**
    **dass** die Strahlfalle einen Kühlkörper (2) aufweist, mit dem Seitenflächen (5, 6) des Absorptionskörpers (3) in Kontakt sind.

13. Strahlfalle nach einem der Ansprüche 10 bis 12, **dadurch gekennzeichnet,**
    **dass** der Absorptionskörper (3) an einer der Eintrittsfläche (4) gegenüberliegenden Oberfläche (7) eine optische Beschichtung trägt, die ausgebildet ist, um in den Absorptionskörper (3) eingetretene optische Strahlung (1) zu reflektieren.

14. Strahlfalle nach Anspruch 13,
    **dadurch gekennzeichnet,**
    **dass** der Absorptionskörper (3) auch an einer oder mehreren anderen Oberflächen die optische Beschichtung trägt, um durch Mehrfachreflexion den Strahlweg der optischen Strahlung (1) im Absorptionskörper (3) zu verlängern.

15. Strahlfalle nach einem der Ansprüche 10 bis 14, **dadurch gekennzeichnet,**
    **dass** das kristalline Material ein dotiertes Diamantmaterial ist.

**Claims**

1. Method for terminating optical radiation, in particular laser radiation, in which the optical radiation (l) is directed towards an absorption body (3) which has an entry surface (4) for the optical radiation (1) and absorbs the optical radiation (l), wherein the absorption body (3) is selected from a crystalline material with an imaginary refractive index for the optical radiation (1) that is to be absorbed,
   **characterized in that**
   the imaginary refractive index causes an absorption length of the optical radiation (1) of > 1 mm in the absorption body (3), wherein the absorption body (3) is selected from a crystalline material which emits fluorescence radiation upon absorption of the optical radiation (l), and wherein one or more surfaces of the absorption body (3) is/are furnished with a coating that either reflects or absorbs the fluorescence radiation to prevent or at least reduce the escape of the fluorescence radiation from the absorption body (3) .

2. Method according to Claim 1,
   **characterized in that**
   the entry surface (4) of the absorption body (3) has an anti-reflection coating for the optical radiation (1).

3. Method according to Claim 1,
   **characterized in that**

the entry surface (4) of the absorption body (3) for the optical radiation (1) in the case of linearly polarised optical radiation (1) is arranged in such manner that the optical radiation (1) is incident on the entry surface (4) at Brewster's angle.

4. Method according to any one of Claims 1 to 3, **characterized in that**
heat generated by absorption of the optical radiation (I) is dissipated via a cooling medium (2), which is in contact with the lateral surfaces (5, 6) of the absorption body (3).

5. Method according to Claim 4,
**characterized in that**
a heat sink or a cooling liquid is used as the cooling medium (2).

6. Method according to any one of Claims 1 to 5,
**characterized in that**
the crystalline material is selected such that the absorption length of the optical radiation (I) in the absorption body (3) requires that the dimensions of the absorption body (3) be sufficient to enable sufficient dissipation of heat generated by absorption of the optical radiation (I) via lateral surfaces (5, 6) of the absorption body (3).

7. Method according to any one of Claims 1 to 6,
**characterized in that**
a surface (7) of the absorption body (3) opposite the entry surface (4) for the optical radiation (1) is furnished with an optical coating on which optical radiation (I) that has entered the absorption body (3) is reflected.

8. Method according to Claim 7,
**characterized in that**
the absorption body (3) also bears the optical coating on one or more other surfaces, in order to lengthen the beam path of the optical radiation (I) in the absorption body (3) by multireflection.

9. Method according to any one of Claims 1 to 8,
**characterized in that**
a doped diamond material is selected as the crystalline material.

10. Beam trap for optical radiation, in particular for performing the method according to one or more the preceding claims, which includes an absorption body (3) with an entry surface (4) for the optical radiation (1),

wherein the absorption body (3) consists of a crystalline material with an imaginary refractive index for the optical radiation (1) that is to be absorbed,

**characterized in that**
the imaginary refractive index causes an absorption length of the optical radiation (1) of > 1 mm in the absorption body (3), wherein upon absorption of the optical radiation (I) the crystalline material emits fluorescence radiation, and one or more surfaces of the absorption body (3) is/are furnished with a coating that either reflects or absorbs the fluorescence radiation to prevent or at least reduce the escape of the fluorescence radiation from the absorption body (3) .

11. Beam trap according to Claim 10,
**characterized in that**
the entry surface (4) of the absorption body (3) has an anti-reflection coating for the optical radiation (1).

12. Beam trap according to Claim 10 or 11,
**characterized in that**
the beam trap has a heat sink (2), with which lateral surfaces (5, 6) of the absorption body (3) are in contact.

13. Beam trap according to any one of Claims 10 to 12,
**characterized in that**
the absorption body (3) is furnished with an optical coating on a surface (7) opposite the entry surface (4), which coating is designed to reflect optical radiation (1) that has entered the absorption body (3).

14. Beam trap according to Claim 13,
**characterized in that**
one or more other surfaces of the absorption body (3) is/are also furnished with the optical coating in order to lengthen the beam path of the optical radiation (I) in the absorption body (3) through multireflection.

15. Beam trap according to any one of Claims 10 to 14,
**characterized in that**
the crystalline material is a doped diamond material.

**Revendications**

1. Procédé pour mettre fin à un rayonnement optique,

en particulier un rayonnement laser, dans lequel le rayonnement optique (1) est orienté sur un corps d'absorption (3), qui présente une surface d'entrée (4) pour le rayonnement optique (1) et absorbe le rayonnement optique (1),
dans lequel le corps d'absorption (3) est constitué est sélectionné parmi un matériau cristallin avec un indice de réfraction imaginaire du rayonnement optique (1) à absorber, **caractérisé en ce que** l'indice de réfraction imaginaire devient égal à une longueur d'absorption du rayonnement optique (1) de > 1 mm dans le corps d'absorption (3),

dans lequel le corps d'absorption (3) est sélectionné parmi un matériau cristallin qui, lorsque le rayonnement optique (1) est absorbé, émet un rayonnement de fluorescence et une ou plusieurs surfaces du corps d'absorption (3) sont dotées d'un revêtement qui réfléchit ou absorbe le rayonnement fluorescent, pour empêcher ou au moins réduire les fuites du rayonnement fluorescent hors du corps d'absorption (3).

2. Procédé selon la revendication 1, **caractérisé en ce que** la surface d'entrée (4) du corps d'absorption (3) présente un revêtement antireflet pour le rayonnement optique (1).

3. Procédé selon la revendication 1, **caractérisé en ce que** la surface d'entrée (4) du corps d'absorption (3) pour le rayonnement optique (1) en présence d'un rayonnement optique (1) polarisé linéairement est disposée de telle sorte que le rayonnement optique (1) bute sur la surface d'entrée (4).

4. Procédé selon une des revendications 1 à 3, **caractérisé en ce que** la chaleur générée en absorbant le rayonnement optique (1) est évacuée via un fluide de refroidissement (2), qui est en contact avec les surfaces latérales (5, 6) du corps d'absorption (3).

5. Procédé selon la revendication 4, **caractérisé en ce que** le milieu de refroidissement (2) est un corps de refroidissement ou un liquide de refroidissement est utilisé.

6. Procédé selon une des revendications 1 à 5, **caractérisé en ce que** le matériau cristallin est sélectionné de telle sorte que la longueur d'absorption du rayonnement optique (1) requiert des dimensions du corps d'absorption (3) du corps absorbant (3), qui permettent une dissipation suffisante de la chaleur résultant de l'absorption du rayonnement optique (1) via les surfaces latérales (5, 6) du corps d'absorption (3).

7. Procédé selon une des revendications 1 à 6, **caractérisé en ce que** le corps d'absorption (3), sur une surface (7), qui est opposée à la surface d'entrée (4) du rayonnement optique (1), porte un revêtement optique, sur lequel le rayonnement optique (1) entré dans le corps d'absorption (3) est reflété.

8. Procédé selon la revendication 7, **caractérisé en ce que** le corps d'absorption (3) porte également sur une ou plusieurs autres surfaces le revêtement optique, afin de prolonger le faisceau du rayonnement optique (1) dans le corps d'absorption (3) par réflexion multiple.

9. Procédé selon une des revendications 1 à 8, **caractérisé en ce qu'**on choisit comme matériau cristallin un matériau diamant dopé.

10. Piège à faisceau pour rayonnement optique, en particulier pour la mise en œuvre du procédé selon une ou plusieurs des revendications précédentes, qui présente un corps d'absorption (3) avec une surface d'entrée (4) pour le rayonnement optique (1), dans lequel le corps d'absorption (3) est constitué d'un matériau cristallin avec un indice de réfraction imaginaire pour le rayonnement optique à absorber (1), **caractérisé en ce que** l'indice de réfraction imaginaire conduit à une longueur d'absorption du rayonnement optique (1) > 1 mm dans le corps d'absorption (3), dans lequel le matériau cristallin émet lors de l'absorption du rayonnement optique (1) un rayonnement de fluorescence et une ou plusieurs surfaces du corps d'absorption (3) sont dotées d'un revêtement réfléchissant ou absorbant le revêtement fluorescent pour empêcher ou au moins réduire le rayonnement fluorescent de s'échapper du corps d'absorption (3).

11. Piège à faisceau selon la revendication 10, **caractérisé en ce que** la surface d'entrée (4) du corps d'absorption (3) présente un revêtement antireflet pour le rayonnement optique (1).

12. Piège à faisceau selon la revendication 10 ou 11, **caractérisé en ce que** le piège à faisceau présente un corps de refroidissement (2) avec lequel les surfaces latérales (5, 6) du corps d'absorption (3) sont en contact.

13. Piège à faisceau selon une des revendications 10 à 12, **caractérisé en ce que** le corps d'absorption (3) sur une surface (7) opposée à la surface d'entrée (4) porte un revêtement optique conçu pour absorber le rayonnement optique (1) qui a pénétré dans le corps d'absorption (3).

14. Piège à faisceau selon la revendication 13, **caractérisé en ce que** le corps absorbant (3) porte également le revêtement optique sur une ou plusieurs autres surfaces, afin de prolonger par réflexion multiple le faisceau du rayonnement optique (1) dans le corps d'absorption (3).

15. Piège à faisceau selon une des revendications 10 à 14, **caractérisé en ce que** le matériau cristallin est un matériau diamant dopé.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012219635 A1
- US 6792017 B2
- US 2018191129 A1